Europäisches Patentamt

(19) European Patent Office (11) Publication number: **0 057 785**

Office européen des brevets **B1**

(12) **EUROPEAN PATENT SPECIFICATION**

(45) Date of publication of patent specification: **28.08.85** (51) Int. Cl.⁴: **C 12 G 3/08**

(21) Application number: **81305121.6**

(22) Date of filing: **29.10.81**

(54) Process for the preparation of a flavored alcoholic beverage.

(30) Priority: **06.02.81 US 231971**

(43) Date of publication of application:
**18.08.82 Bulletin 82/33**

(45) Publication of the grant of the patent:
**28.08.85 Bulletin 85/35**

(84) Designated Contracting States:
**DE FR GB**

(56) References cited:
**GB-A-1 177 126**

**CHEMICAL ABSTRACTS, vol. 83, no. 13, 22nd
December 1975, page 279, no. 204769f,
Columbus Ohio (USA); H. KIENINGER et al.:
"Production of low alcohol beer using reverse
osmosis"**

**MICROBIOLOGY ABSTRACTS SECT A., vol. 14,
no. 11, November 1979, page 45, no. 8546-A14,
London (GB); K. WUCHERPFENNIG: "Possible
applications of procedures utilizing
membranes for the stabilization of wines
(ultrafiltration, inverse osmosis,
electrodialysis).**

(73) Proprietor: **Miller Brewing Company
3939 W. Highland Boulevard
Milwaukee Wisconsin 53223 (US)**

(72) Inventor: **Goldstein, Henry
15645 Heather Hill Drive
Brookfield Wisconsin 53005 (US)**
Inventor: **Hoff, Joseph T.
West 305 North 5295 Gail Lane
Hartland Wisconsin 53029 (US)**
Inventor: **Cronan, Charles L.
4239 North Larkin Street
Shorewood Wisconsin 53211 (US)**
Inventor: **Rao, Ch. Subba
7731 North 59th Street
Milwaukee Wisconsin 53223 (US)**

(74) Representative: **Wynne-Jones, John Vaughan
et al
Wynne-Jones, Lainé & James 22, Rodney Road
Cheltenham Gloucestershire GL50 1JJ (GB)**

Courier Press, Leamington Spa, England.

## Description

The present invention relates to a process for the production of a stable alcoholic beverage and more particularly, to a method of preparing a stable flavored alcoholic beverage by use of reverse osmosis.

There is a continuing interest in the marketing of flavored malt beverages which are prepared by adding a nontraditional beer flavor to a fermented alcoholic or beer base.

Flavored malt beverages have been marketed for many years in Europe. In Germany, a mixture of beer and concentrated raspberry juice is available; in France, a blend of beer and lemonade or limeade is popular; in England "shandy", a mixture of beer and lemonade or lime juice is available; and in Belgium, mixtures of beer and cherry juice and beer and grenadine syrup are available.

In the past, various attempts have been made to produce by fermentation processes neutral tasting bases or bland beers which could be used as bases to produce malt beverages having desired non-traditional beer flavors.

It has recently been discovered that such beer bases contain components which upon storage will interact with the added flavoring agents, especially the citrus-type flavoring agents, to produce off aromas which have been described by taste panels as resembling "rotten fruit". The off aromas are more obvious when the flavored malt beverage has been stored at elevated temperatures which suggests that the off aromas are probably due to the presence of heat labile components in the beer base.

It is the primary object of the present invention to provide a method of preparing stable flavored alcoholic beverages by removing labile components from the base prior to adding the flavoring agents.

Broadly stated the invention may be defined as the use of an alcoholic base in preparing flavored alcoholic beverages, characterised in that the beverages do not form off aromas on storage, the base being prepared by selecting as a feed a alcoholic base which contains labile components which can in the presence of flavoring agents cause off aromas to develop upon storage, subjecting said feed to reverse osmosis employing a membrane which does not permit said labile components to pass therethrough and collecting the permeate which passes through said membrane to obtain the desired alcoholic base.

It has been proposed in GB—A—177126 to separate beer, wine, or spirits, into two fractions by osmosis, using a semi-permeable cellulose acetate membrane. One fraction (the concentrate) contains most of the solids and non-volatile substances, with a reduced amount of alcohol, and this fraction may usefully be shipped abroad to be mixed with local alcohol and water and thus reconstitute the original beer or wine. The other fraction (the percolate) is collected from the other side of the membrane and this contains most of the water, ethyl alcohol, and higher alcohols and esters, and may be used in various ways, for example as the basis for distilling industrial alcohol. This specification however contains no reference to the problem of "off aromas" which arises when an alcoholic beverage is mixed with a fruit based flavoring agent, and no suggestion that the "off aroma" problem may be solved by passing the alcholic beverage through a reverse osmosis treatment.

In the preferred embodiment of the present invention, the alcoholic base, which can be a beer, a near beer or a wine, is subjected to reverse osmosis to remove from the alcoholic base the labile components that apparently interact with flavor ingredients to cause "off aromas" during the storage of flavored malt beverages.

"Reverse osmosis", as used herein, describes membrane separation processes by which a solution containing a solute having molecular dimensions greater than or of about the same order of magnitude of the molecular dimensions of the solvent in which it is dissolved, is depleted of solute by being subjected to a pressure that forces the solvent to pass through a membrane whose physical and chemical properties result in leaving the solute to concentrate. The term "ultra filtration" is sometimes used to describe such pressure activated membrane separations which involve solutions of solutes of about 500 molecular weight and above, and the term "reverse osmosis" is sometimes used to refer to such membrane separation process wherein the molecules of the solute are of a size within one order of magnitude of those of the solvent.

Three terms are used repeatedly by those skilled in the art relating to pressure activated membrane separations. They are the following:

(a) "feed" which refers to the original solution or recycled concentrate;

(b) "permeate" which refers to the liquid including solvent which passes through the membrane; and

(c) "concentrate" which refers to the liquid which remains behind and contains the concentrate solute.

The reverse osmosis process results in production of two liquid fractions, the "permeate" and the "concentrate". It is the "permeates" which are used to produce the flavored malt beverages which are unexpectedly stable and do not produce off aromas even when stored at elevated temperatures.

Attempts to remove the labile components of the base by other techniques have been unsuccessful. In addition, reverse osmosis has the advantages of speed of operation, mild operating conditions, and low operating costs compared to various other separation processes such as evaporation, dialysis, ultra centrifugation, ion exchange, chemical precipitation and the like. Such advantages are especially important where the material to be processed is biologically active or thermally unstable, or where relatively large volumes of solvent are present in the solution to be processed.

In the preferred practice of the present invention, the "feed" is a beer prepared by fermentation of a wort consisting of malt and highly fermentable syrup adjunct. However, as previously indicated, the "feed" could be almost any alcoholic beverage such as near beer, beer, ale, and wines.

The preferred osmosis membrane is a cellulose acetate membrane which is rated for pressures up to 240 psi. The reverse osmosis membrane need not be cellulose acetate, it could be one of the other commercially available membranes such as polysulfones, aromatic polyamides, nylon, as well as composite or grafted membranes of various configurations which effectively remove the labile components from the feed which interact with the flavors to form the off aromas.

In the preferred process, a cellulose acetate membrane is used with a pressure of less than 240 psi at ambient temperature or less. However, commercial production would conceivably employ larger commercial reverse osmosis units with membranes capable of handling pressures of up to 800 psi or greater.

The preferred membranes are cellulose acetate membranes such as those available from Osmonics, Inc. of Hopkins, Minnesota under the trade symbol SEPA. The SEPA membranes are made of cellulose actetate polymer which has high stability between pH2 and pH8. The SEPA membranes are integrally bonded to a synthetic backing material which gives added strength and simplifies orientation of the membrane. SEPA membranes are anisotropic in nature and have a dense top skin with a porous support layer. An especially preferred membrane is SEPA—97 with a 94—97% NaCl rejection, a molecular weight cut-off of 200 for organics and 10 to 15 gal/day—ft$^2$ at 77° F at 400 psig. The membrane has a nominal pore size of 5 Angstroms, a maximum operating pressure of 800 psig and a normal operating pressure of 400—450 psig. An example of a membrane which may be particularly adaptable for commercial high flow rates is an anisotropic high flux, low pressure polymeric membrane.

The practice of the invention may be further illustrated by the examples which follows:

### Example 1

Nineteen liters of beer having an ethyl alcohol content of 7.69% on a weight by weight basis and an extract content of 1.46% on the same basis were concentrated using a table top reverse osmosis unit made by Osmonics, Inc. of Hopkins, Minnesota. The table top unit employed a cellulose acetate membrane which was rated for pressure up to 240 psi. The unit was operated at between 3° and 4° C using a pressure of 185 psi. From the 19 liters of beer which was used as a feed and the concentrate recycle through the membrane, 16.3 liters of permeate were obtained which contained 7.73% w/w ethanol and an extract content of 0.16% w/w.

Two flavored beverages were produced. One employed the permeate as the alcoholic base and the other employed the beer feed. Each of the beverages had the following formula:

| Ingredients | ml |
| --- | --- |
| High Fructose Corn Syrup | 60 |
| 10% Citric Acid in Water | 22 |
| 15% Terpeneless Lemon Oil in Ethanol | 0.03 |
| 16% Sodium Benzoate in Water | 1 |
| Beer or Permeate | 400 |
| Deionized Water q/s/ad | 800 |

The resulting ethanol contents were 3.84% w/w and 3.86% w/w for the flavored beverages made for the beer and the permeate, respectively. The beverages were then placed in a syphon and carbonated with one carbon dioxide charger per 800 ml. After equilibrating one hour at 42° F, the beverages were bottled in 12 oz. bottles and crowned. Samples of these beverages were stored for two weeks at three temperatures: 32°, 75° and 100° F, equilibrated at 42° F and sensorially evaluated by a sensory panel consisting of eight members.

The beverage made with the beer was characterized for 32° F storage as beery, fresh, citrus, spicy. For 75° F, the expected decrease in flavor intensity was noted and for 100° F the beverage was characterized as having a "rotten fruit" like aroma, sulfury, and stale. In contrast, the beverage made with the permeate as the base was characterized for 32° F storage as fresh, citrus, spicy, beery; for 75° F and 100° F the expected decrease in flavor intensity was again noted, but very little, if any, "rotten fruit" like or sulfury aromas were observed. Surprisingly, only one panelist noted a stale flavor.

### Example 2

A 23.5 liter sample of a commercial beer having an ethanol content of 5.25% w/w and extract content of 5.68% by weight were concentrated by reverse osmosis using the same equipment and conditions as in Example 1. The first 2 liters, middle 15 liters and last 2 liters of permeate were isolated for evaluating their relative stabilities when used to produce flavored beverages. Flavored beverages were made as in Example 1 adjusting the amount of deionized water to give a 3.80% w/w ethanol content in the final products. Samples were stored at 32° F and 100° F for two weeks. After equilibrating the samples at 42° F, a sensory panel of five people characterized all three samples stored at 32° F as beery, fresh, citrus, and spicy. The three samples stored at 100° F were noted to be very slightly staled, and to have a decreased flavor intensity, but to have no "rotten fruit" or sulfury aroma.

### Example 3

Fifty-seven liters of beer (identical to the beer in Example 2) were passed through the reverse osmosis unit one time rather than recycled as in Examples 1 and 2. Three liters of permeate were collected having an ethanol content of 5.23% w/w and 0.10% real extract content. Flavored beverages were made and treated as in Example 2. A sensory panel of five people characterized the sample stored at 32° F as beery, fresh, citrus and spicy. They characterized the sample stored at 100° F as having a decreased flavored intensity but not as having a "rotten fruit" or sulfury aroma.

### Example 4

Fourteen liters of the permeate obtained in Example 1 were passed through a column (dia. = 2.5 cm) containing 85 g of activated carbon at a flow rate of 40 ml/min. A flavored beverage was then produced and treated as in Example 1. A sensory panel of eight members characterized the 32° F sample as fresh, spicy, and citrus. For 75° F and 100° F the expected decrease in flavor intensity was noted but little "rotten fruit" like or sulfury aroma was observed.

### Example 5

One liter portions of the three permeates of Example 2 were contacted with 2 g activated carbon with stirring for 30 minutes, stored at 32° F for 4 days and the carbon separated from the permeate by filtration. Flavored beverages were made with the filtrates as in Example 2 and treated as in Example 2. A sensory panel of five people characterized the three samples stored two weeks at 32° F as fresh, citrus, and spicy, with little beer character while the three samples stored two weeks at 100° F showed a decrease in flavor intensity with no "rotten fruit" like or sulfury aroma and very little staleness.

### Example 6

A 1.5 liter sample of permeate (Example 3) was treated with 3 g activated carbon as in Example 5. Flavored beverages were made with the filtrate as in Example 2 and treated as in Example 2. A sensory panel of five people characterized the sample stored two weeks at 32° F as fresh, citrus, and spicy with little beer character while the sample stored two weeks at 100° F showed a decrease in flavor intensity, but no "rotten fruit" like or sulfury aroma and little staleness.

It will be apparent to those skilled in the art that the method of the invention can be used with a variety of alcoholic feeds to obtain permeates which can be used as bases to prepare more stable flavored alcoholic beverages. Therefore, the invention is not to be limited except by the claims which follow:

**Claims**

1. The use of an alcoholic base in preparing flavored alcoholic beverages, characterised in that the beverages do not form off aromas on storage, the base being prepared by selecting as a feed a alcoholic base which contains labile components which can in the presence of flavoring agents cause off aromas to develop upon storage, subjecting said feed to reverse osmosis employing a membrane which does not permit said labile components to pass therethrough and collecting the permeate which passes through said membrane to obtain the desired alcoholic base.

2. A stable flavored alcoholic beverage obtained according to the method specified in Claim 1.

3. A method of preparing an alcholic base for use in preparing flavored alcoholic beverages which do not form off aromas on storage, which comprises selecting as a feed an alcoholic base which contains labile components which can in the presence of flavoring agents cause off aromas to develop upon storage, subjecting said feed to reverse osmosis employing a membrane which does not permit said labile components to pass therethrough and collect in the permeate which passes through said membrane to obtain the desired alcoholic base, characterised in that the said membrane has a molecular weight cut-off of approximately 200 for organics.

4. The method of Claim 3 characterised in that the feed is beer.

5. The method of Claim 3 characterised in that the membrane is a cellulose acetate membrane.

6. An alcoholic base suitable for the preparation of stable flavored alcoholic beverages characterised in that it is prepared by the process of Claim 3.

7. A stable flavored alcoholic beverage including an alcoholic base as claimed in Claim 6.

**Revendications**

1. Utilisation d'une base alcoolique dans la fabrication de boissons alcooliques aromatisées, caractérisée en ce que les boissons ne forment pas d'arômés au stockage, la base étant préparée en choisissant comme charge une base alcoolique qui contient des composants labiles pouvant provoquer au stockage en présence d'agents aromatisants le développement d'arômes éventés, en soumettant ladite charge à l'osmose inverse en employant une membrane qui ne permet pas le passage desdits composants labiles et en recueillant le perméat qui passe à travers ladite membrane pour obtenir la base alcoolique désirée.

2. Boisson alcoolique aromatisée stable, caractérisée en ce qu'elle est obtenue par le procédé selon la revendication 1.

3. Procédé de fabrication d'une base alcoolique pour l'utilisation dans la préparation de boissons alcooliques aromatisées qui ne forment pas au stockage d'arômes éventés, qui consiste à choisir comme charge une base alcoolique qui contient des composants labiles pouvant provoquer au stockage en présence d'agents aromatisants l'apparition d'arômes éventés, à soumettre ladite charge à l'osmose inverse en utilisant une membrane qui ne permet pas le passage desdits composants labiles et à receuillir le perméat qui passe à travers ladite membrane pour obtenir la base alcoolique désirée, caractérisé en ce que ladite membrane a une limite de poids moléculaire d'environ 200 pour les substances organiques.

4. Procédé selon la revendication 3, caractérisé en ce que la charge est de la bière.

5. Procédé selon la revendication 3, caractérisé en ce que la membrane est une membrane en acétate de cellulose.

6. Base alcoolique appropriée pour la fabrication de boissons alcooliques aromatisées stables, caractérisée ce qu'elle est préparée par le procédé selon la revendication 3.

7. Boisson alcoolique aromatisée stable, caractérisée en ce qu'elle contient une base alcoolique selon la revendication 6.

**Patentansprüche**

1. Verwendung eines alkoholischen Grundstoffes zur Herstellung aromatisierter alkoholischer Getränke, dadurch gekennzeichnet, daß die Getränke bei der Lagerung keine unpäßlichen oder unerwünschten aromatischen Stoffe bilden, daß die Herstellung des Grundstoffes aus einem alkoholischen Ausgangsstoff erfolgt, der unbeständige Komponenten enthält, die in Anwesenheit von Geschmacksstoffen die Entwicklung von unerwünschten aromatischen Stoffen während der Lagerung hervorrufen können, der Grundstoff einer umgekehrten Osmose unterworfen wird, wobei eine Membran verwendet wird, die die unbeständigen Komponenten nicht durchläßt und daß die durch die Membran hindurchgehende Flüssigkeit gesammelt wird, um den gewünschten alkoholischen Grundstoff zu erhalten.

2. Beständiges aromatisiertes alkoholisches Getränk, das nach dem Verfahren gemäß Anspruch 1 erhalten wird.

3. Verfahren zur Herstellung eines alkoholischen Grundstoffes zur Herstellung aromatisierter alkoholischer Getränke, die bei der Lagerung keine unerwünschten aromatischen Stoffe bilden, wobei als Ausgangsstoff ein alkoholischer Grundstoff dient, der unbeständige Komponenten enthält, die in Anwesenheit von Geschmacksstoffen bei der Lagerung unerwünschte aromatische Stoffe entwickeln, der Ausgangsstoff einer umgekehrten Osmose unterworfen wird, bei der eine Membran verwendet wird, die die unbeständigen Komponenten nicht durchläßt und die Flüssigkeit, die durch die Membrane hindurchgetreten ist, gesammelt wird, um den gewünschten alkoholischen Grundstoff zu erhalten, dadurch gekennzeichnet, daß die Trenngrenze der Membrane für organische Stoffe bei einem Molekulargewicht von etwa 200 liegt.

4. Verfahren nach Anspruch 3, dadurch gekennzeichnet, daß der Ausgangsstoff Bier ist.

5. Verfahren nach Anspruch 3, dadurch gekennzeichnet, daß die Membrane aus Celluloseacetat besteht.

6. Alkoholischer Grundstoff zur Herstellung von beständigen aromatisierten alkoholischen Getränken, dadurch gekennzeichnet, daß er nach dem Verfahren gemäß Anspruch 3 hergestellt ist.

7. Beständiges aromatisiertes alkoholisches Getränk, das einen alkoholischen Grundstoff gemäß Anspruch 6 enthält.